Europäisches Patentamt

**European Patent Office**

**Office européen des brevets**

(11) Publication number: **0 162 116**
**B1**

(12) **EUROPEAN PATENT SPECIFICATION**

(45) Date of publication of patent specification: **02.11.89**

(21) Application number: **84904173.6**

(22) Date of filing: **19.11.84**

(51) Int. Cl.⁴: **H 04 N 7/01,** H 04 N 5/44, H 04 N 5/04

(86) International application number: **PCT/JP84/00553**

(87) International publication number: **WO 85/02511 06.06.85 Gazette 85/13**

(54) TELEVISION RECEIVER.

(30) Priority: **22.11.83 JP 219733/83**

(43) Date of publication of application: **27.11.85 Bulletin 85/48**

(45) Publication of the grant of the patent: **02.11.89 Bulletin 89/44**

(84) Designated Contracting States: **DE FR GB NL**

(56) References cited:
GB-A-2 090 504
GB-A-2 092 858
JP-A-5 894 278
JP-B-4 616 178

(73) Proprietor: **SONY CORPORATION**
**7-35 Kitashinagawa 6-Chome Shinagawa-ku Tokyo 141 (JP)**

(72) Inventor: **IKEDA, Yasunari Sony Corporation**
**7-35, Kitashinagawa 6-chome Shinagawa-ku Tokyo 141 (JP)**
Inventor: **NAKANO, Hiroshi Sony Corporation**
**7-35, Kitashinagawa 6-chome Shinagawa-ku Tokyo 141 (JP)**
Inventor: **YUCHI, Hirofumi Sony Corporation**
**7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

Courier Press, Leamington Spa, England.

## Description

This invention relates to a television receiver.

In existing television systems, interlaced scanning is used in which one picture (frame) is transmitted as two vertical scannings (fields), so as to increase the number of scanning lines as much as possible in a limited frequency band without introducing flicker.

However, in the CCIR system mainly employed in European countries, the field frequency is 50 Hz, so flicker cannot be completely removed and may become conspicuous particularly at high brightness.

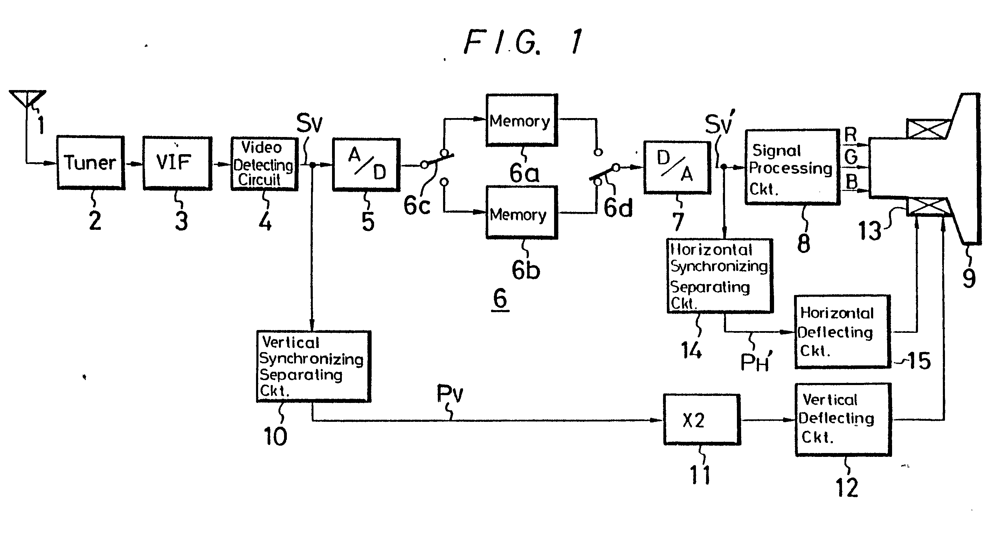

Therefore, a television receiver has been proposed in which a television picture is displayed at a field frequency twice the normal field frequency. Figure 1 shows an example thereof.

The receiver comprises an antenna 1, a tuner 2, a video intermediate frequency amplifier 3, and a video detecting circuit 4 which produces an interlaced video signal Sv of, for example, 625 lines/50 fields and 2:1.

The video signal Sv is converted to a digital signal by an analogue-to-digital (A/D) converter 5, and is then fed to a converting circuit 6 so as to be converted to a twice field frequency video signal, that is, a signal of twice the normal field frequency.

The converting circuit 6 is formed of field memories 6a and 6b, which are random access memories (RAMs) having a storage capacity of picture elements of one field period (1V), and switching circuits 6c and 6d. The switching circuit 6c switches between the memories 6a and 6b at every field period 1V, while the switching circuit 6d switches inversely. The memory 6a or 6b selected by the switching circuit 6c is supplied with a write clock pulse having a timing corresponding to the above-described picture elements, while the memory 6b or 6a selected by the switching circuit 6d is supplied with a read clock pulse with a frequency twice that of the write clock pulse.

One field of the video signal Sv converted to a digital signal by the A/D converter 5 is supplied through the switching circuit 6c to the memory 6a or 6b for writing at every field period 1V. The field of video signal written in the memory 6b or 6a during the preceding field period 1V, is read out therefrom twice successively with a cycle of V/2. This video signal is derived through the switching circuit 6d, and is converted to an analogue signal Sv' by a digital-to-analog D/A converter 7, and fed to a signal processing circuit 8 from which red, green and blue primary colour signals R, G and B are produced and supplied to an image tube 9.

The video signal Sv derived from the detecting circuit 4 is also supplied to a vertical synchronizing signal separating circuit 10. A vertical synchronizing signal Pv derived by the separating circuit 10 is multiplied by a frequency multiplier 11 to form a signal of frequency twice the normal frequency. This signal is supplied through a vertical deflecting circuit 12 to a deflecting coil 13.

The video signal Sv' derived from the D/A converter 7 is also supplied to a horizontal synchronizing signal separating circuit 14. A horizontal synchronizing signal $P_H'$ (having a frequency twice the normal frequency) derived from the separating circuit 14 is supplied through a horizontal deflecting circuit 15 to the deflecting coil 13.

The primary colour signals R, G and B, each of which has a field frequency twice the normal frequency, are supplied to the image tube 9, and the horizontal and vertical scanning is carried out at twice the normal scanning speed, so a colour picture with a field frequency twice the normal field frequency is displayed on the image tube 9. Accordingly, in the CCIR system, the field frequency becomes 100 Hz, so the viewer sees no flicker.

In the example of Figure 1, however, the horizontal synchronization of the video signal Sv' derived from the converting circuit 6 is disturbed cyclically, so that distortion occurs in the upper portion of the picture screen.

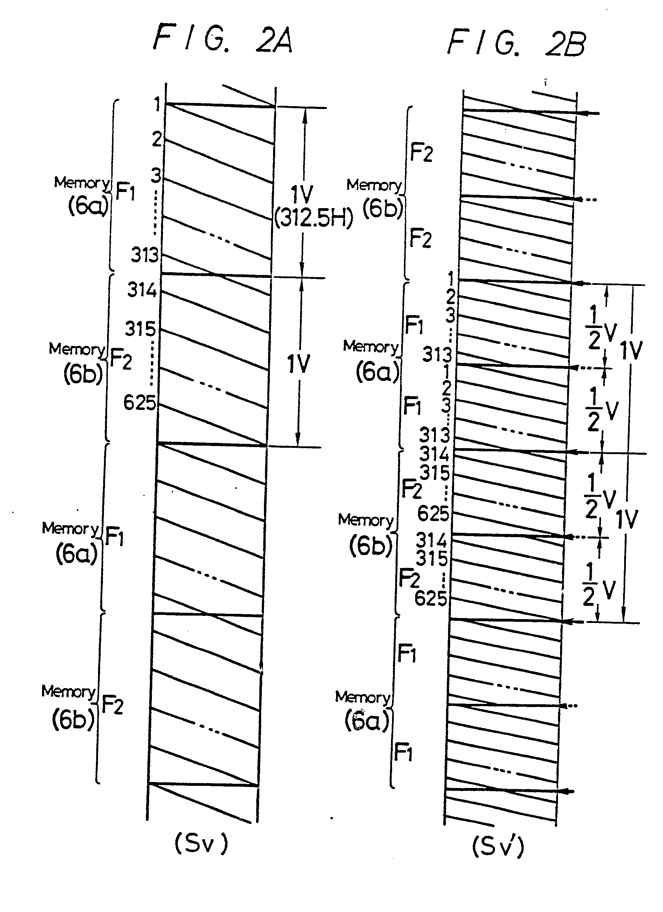

That is, the write-in state of the video signal Sv derived from the detecting circuit 4 in the memories 6a and 6b is as shown in Figure 2A, in which references $F_1$ and $F_2$ designate first and second fields, respectively. The video signal Sv' from the converting circuit 6 is as shown in Figure 2B. In the figure, arrows represent the positions of the vertical synchronizing signals. As will be clear from Figure 2B, in the video signal Sv', the phase of the horizontal synchronization is displaced by 180° at every second field, or at every 1/50 second, whereby the synchronization on the upper portion of the picture screen is disturbed, resulting in a picture distortion.

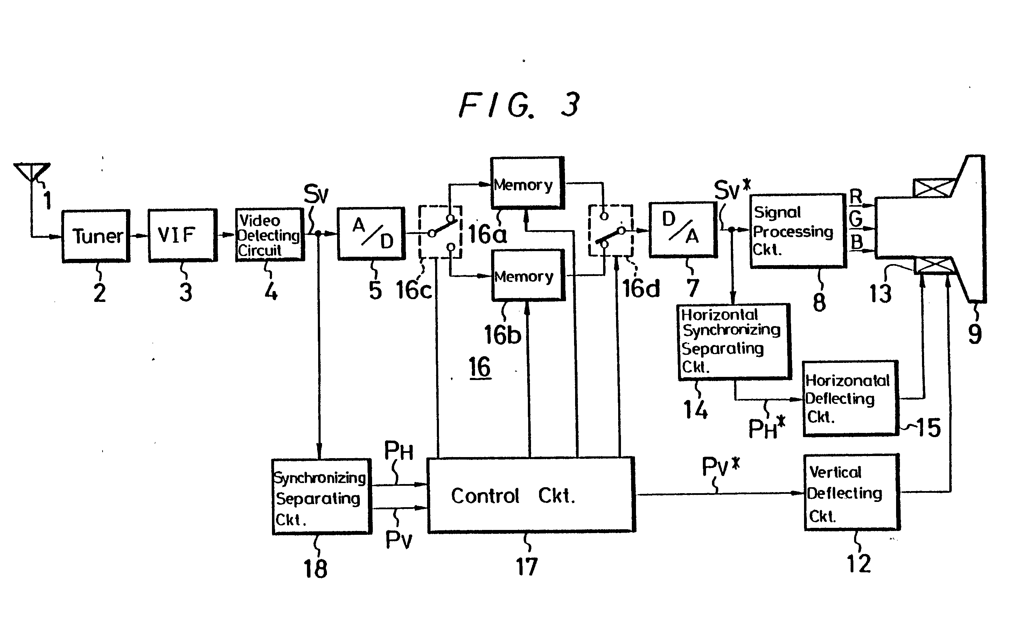

Therefore, we have proposed a television receiver which is free of such distortion, and Figure 3 shows an example thereof. In Figure 3, parts corresponding to those of Figure 1 have the same references.

In Figure 3, the video signal Sv derived from the detecting circuit 4 is converted to a digital signal by the A/D converter 5, and is then fed to a converting circuit 16 so as to be converted to the twice field frequency video signal.

The converting circuit 16 is formed of field memories (RAMs) 16a and 16b having respective storage capacities of picture elements of 313 horizontal periods (313H) and 312 horizontal periods (312H), and switching circuits 16c and 16d. The switching circuit 16c connects alternately to the memory 16a during each period of 313H and to the memory 16b during each period of 312H, while the switching circuit 16d is switched inversely. The switches 16c and 16d are controlled by a control circuit 17 which is supplied with horizontal and vertical synchronizing signals $P_H$ and $P_V$ which are separated from the video signal Sv by a synchronizing signal separating circuit 18.

The memory selected by the switching circuit 16c is supplied with a write clock pulse having a timing corresponding to the above picture elements, while the memory selected by the switching circuit 16d is supplied with a read clock pulse with a frequency twice the frequency of the write clock pulse.

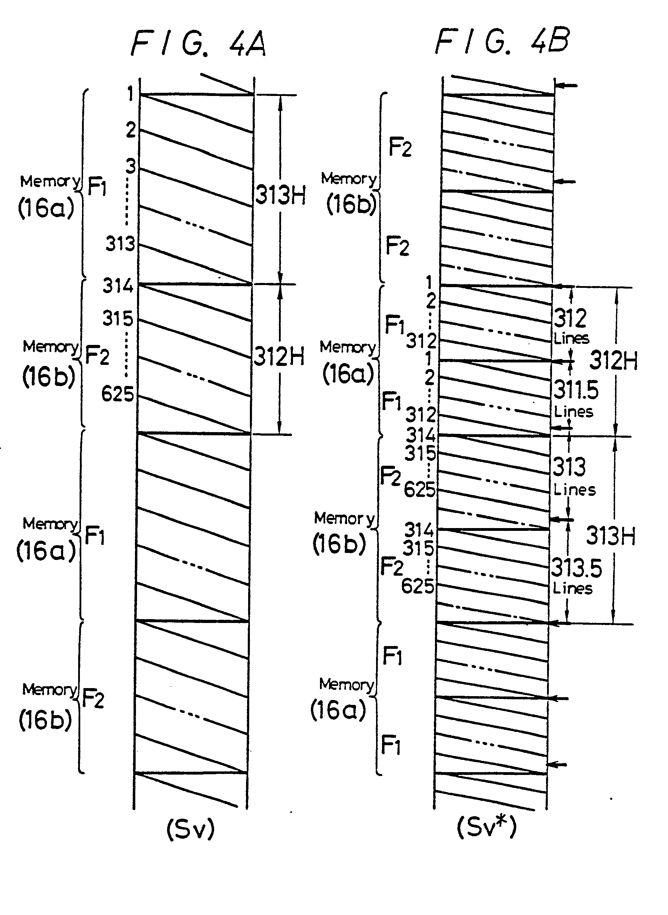

The video signal Sv converted to a digital signal by the A/D converter 5 is supplied through the switching circuit 16c to the memories 16a and 16b in which it is alternately written during each period of 313H and 312H. Figure 4A shows the write-in state of the memories 16a and 16b, in which references $F_1$ and $F_2$ represent the first and second fields, respectively. During the periods of 313H and 312H in which the video signal is being written in one of the memories 16a or 16b, the video signal written in the other of the memories 16b or 16a during the preceding period is read out therefrom twice successively. This signal is derived through the switching circuit 16d as a twice field frequency video signal Sv* (Figure 4B), in which the field portions corresponding to those of Figure 4A are marked with the same references. Due to the difference between the write time and the read time, each field of the video signal Sv* has an extra line or lacks a line.

In Figure 4B, at the portions of, for example, the $F_1$ and $F_1$ fields (the portions read out from the memory 16a), 313 lines are not read out because of the time relationship. Moreover, at, for example, the $F_2$ and $F_2$ field portions (the portions read out from the memory 16b), one line of the video signal is lacking, and during that period the reading operation is stopped and one line is lacking. The extra and lacking lines of the video signal occur in the vertical blanking period, so that in practice this does not disturb the television picture.

The writing in and reading out from the memories 16a and 16b are controlled by the control circuit 17.

The video signal Sv* derived from the switching circuit 16d is converted to an analogue signal by the D/A converter 7, and is fed to the signal processing circuit 8 which produces the red, green and blue primary colour signals R, G and B which are fed to the image tube 9.

The control circuit 17 produces a vertical synchronizing signal Pv* at the timing shown by arrows in Figure 4B. More particularly, the vertical synchronizing signal Pv* is produced at the beginning of the first $F_1$ field; 312 lines after the preceding line, namely, at the beginning of the second $F_1$ field; 311.5 lines after the preceding line; 313 lines after the preceding line; and 313.5 lines after the preceding line, that is at the beginning of the first $F_1$ field, and so on. The synchronizing signal Pv* is supplied through the vertical deflecting circuit 12 to the deflecting coil 13 by which the vertical scanning is carried out. When the synchronizing signal Pv* is produced at the above-mentioned timing, in each $F_1$ field and each $F_2$ field, the scanning lines are formed at the same positions, and the scanning lines respectively formed in the $F_1$ field and $F_2$ field are displaced by half a scanning line. In other words, the interlaced relation of the video signal Sv is retained.

The video signal Sv* from the D/A converter 7 is supplied to the horizontal synchronizing signal separating circuit 14 which derives a horizontal synchronizing signal $P_H$* (having a frequency twice the normal frequency) which is supplied through the horizontal deflecting circuit 15 to the deflecting coil 13 by which the horizontal scanning is carried out.

With the television receiver of Figure 3, the horizontal synchronization of the video signal Sv* becomes continuous as shown in Figure 4B, so that the synchronization is not disturbed, unlike the example of Figure 1, and thus no picture distortion is produced.

However, in the television receiver of Figure 3, since the timing of the vertical synchronizing signal Pv* is determined such that the scanning lines of each $F_1$ field and each $F_2$ field are respectively formed at the same positions (see the arrows in Figure 4B), the vertical cycle varies very slightly, and is not exactly 1/100 second (10 m sec).

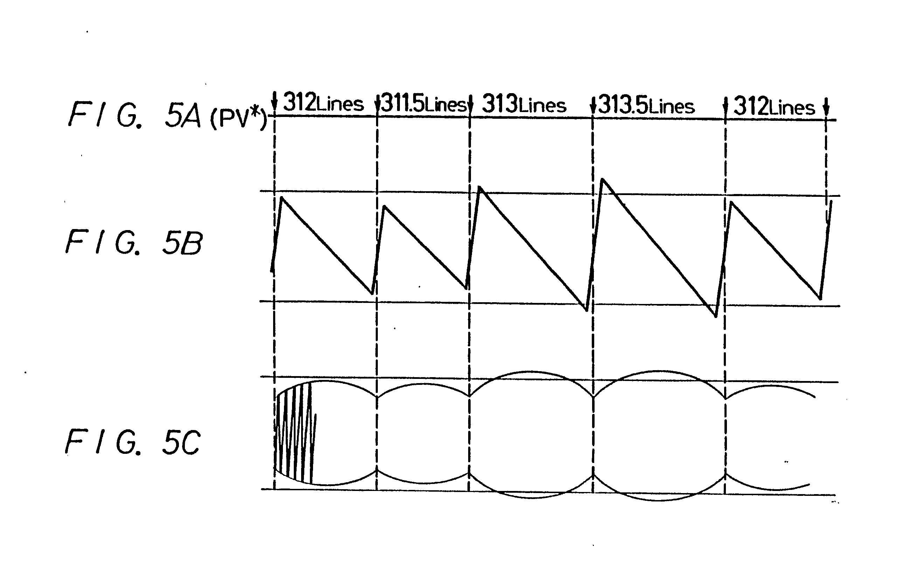

In a television receiver, in order to correct left and right pin-cushion distortion, a parabolic wave current with the vertical synchronizing frequency is superimposed on the horizontal deflection current. In this case, since the cycle of the vertical synchronizing signal Pv* is different (see Figure 5A) as mentioned above, the vertical deflection current also becomes correspondingly different (see Figure 5B). Moreover, the horizontal deflection current waveform is changed at every vertical cycle (see Figure 5C). As described above, since the horizontal deflection current waveform is different, jitter appears in the right and left ends of the picture screen at a fundamedntal frequency of 25 Hz (four field cycles of $F_1$, $F_1$, $F_2$ and $F_2$). This jitter becomes more conspicuous as the deflection angle becomes larger.

To remove this jitter, it might be thought that the horizontal deflection current waveform could be corrected by the deflecting system. However, the correction thereof is very difficult and requires a special deflection correcting circuit.

In this case, since the cycle of the vertical synchronizing signal Pv* becomes different (see Figure 5A), the vertical deflecting current also becomes different at every vertical cycle (see Figure 5B) but this does not have such a serious effect on the picture.

A field frequency doubling circuit for a television signal is also disclosed in UK Patent Specification GB—A—2 092 288, and has features generally as set out in the pre-characterizing part of claim 1 below.

According to the present invention there is provided a television receiver comprising:

scan converter means including field-memory means to be supplied with an input video signal of an interlaced television signal having a predetermined interlace-ratio;

memory control means for supplying writing and reading signals to said field-memory means where said reading signal has a frequency which is a multiple of the frequency of said writing signal;

video display means; and

deflection means including vertical deflection means for vertically deflecting said video display means with a vertical synchronizing signal having a constant period;

characterized by:

said scan converter operating such that one field of said input video signal is read repeatedly said multiple number of times and thereafter a succeeding one field of said input video signal is read repeatedly said multiple number of times for deriving an output video signal for supply to said video display means; and

timing control means for controlling the timing of said output video signal to have a vertical frequency such that a picture reproduced on said video display means has an interlace-ratio the same as said predetermined interlace-ratio of said input video signal.

In an embodiment of the present invention each vertical period is equal, so the horizontal deflecting current waveforms are the same in each vertical cycle. As a result, jitter is not produced at the right and left sides of the picture screen.

The invention will now be described by way of example with reference to the accompanying drawings, throughout which like parts are referred to by like references, and in which:

Figures 1 and 3 are diagrams of respective previously proposed examples;

Figures 2, 4 and 5 are diagrams for explaining these examples;

Figure 6 is a diagram showing an embodiment of television receiver according to the present invention;

Figures 7 and 8 are diagrams for the explanation thereof;

Figures 9 and 10 and 12 to 14 are diagrams showing other embodiments of television receiver according to the present invention; and

Figure 11 is a diagram for explaining the embodiments of Figures 9 and 10.

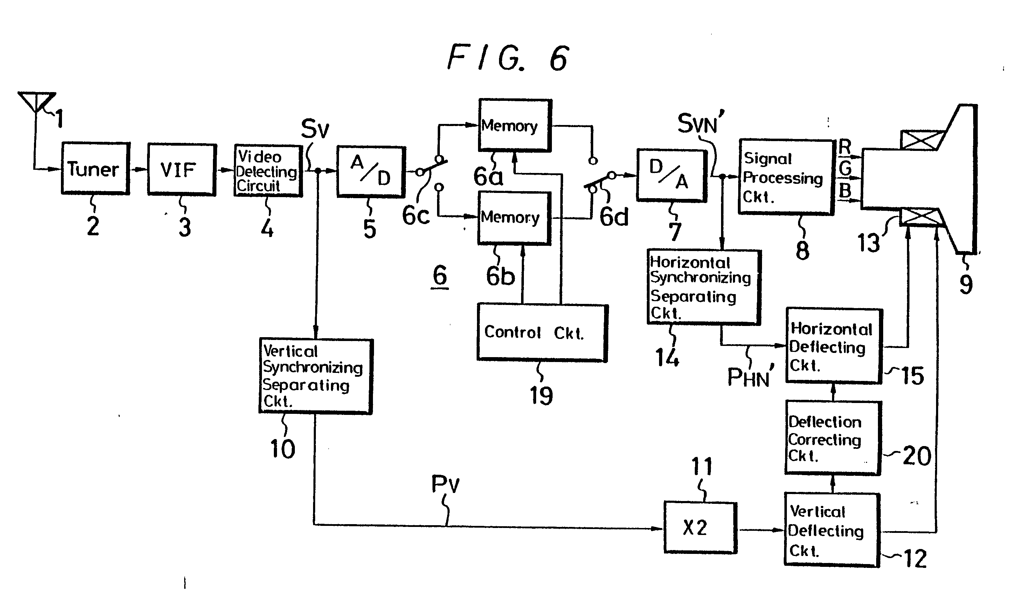

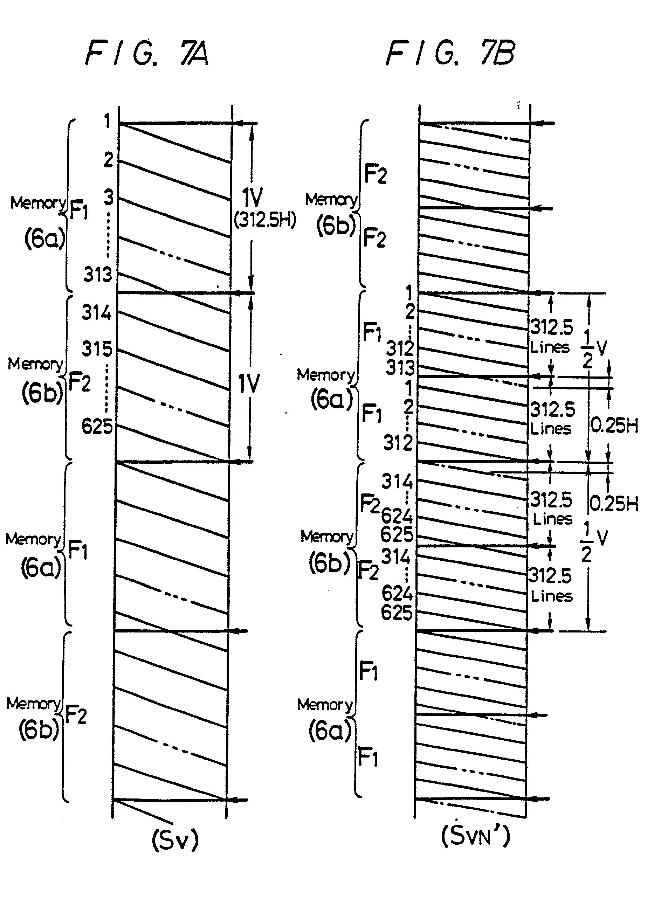

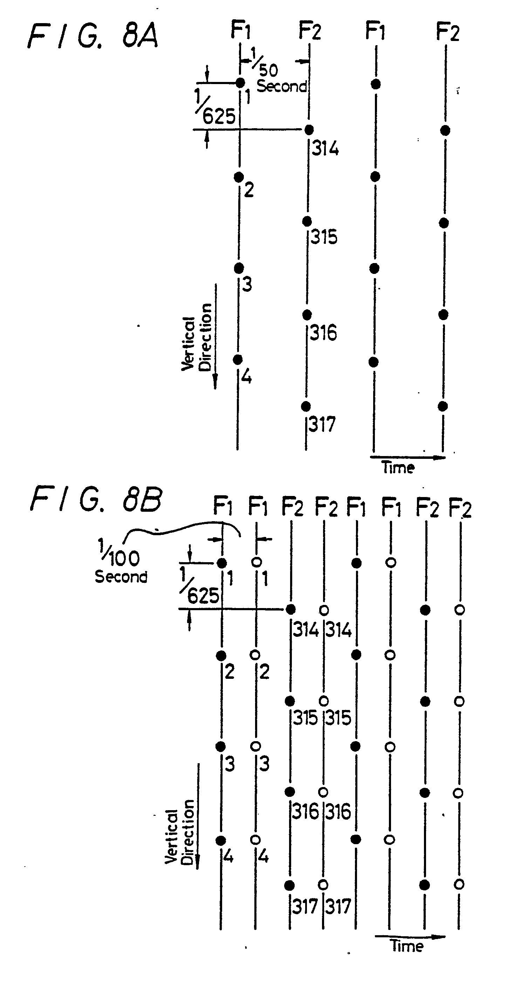

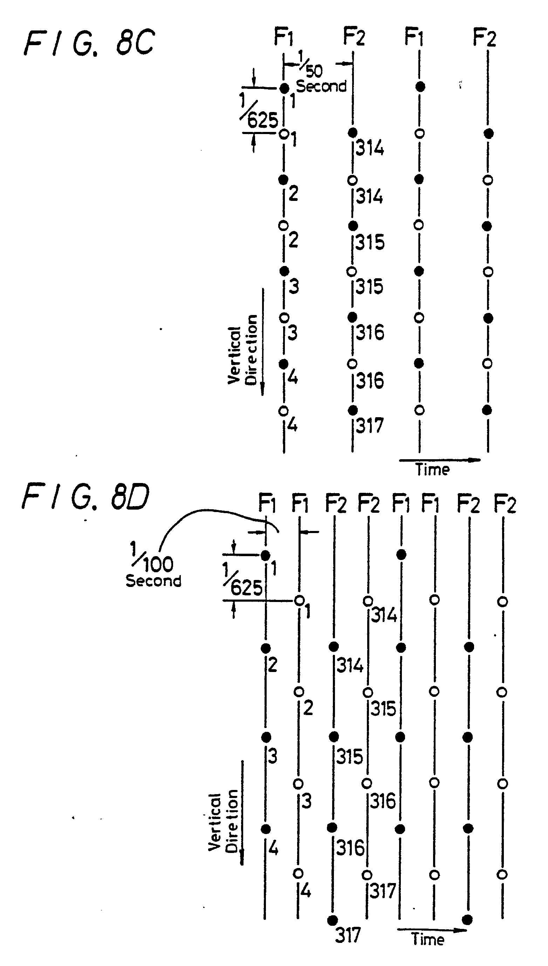

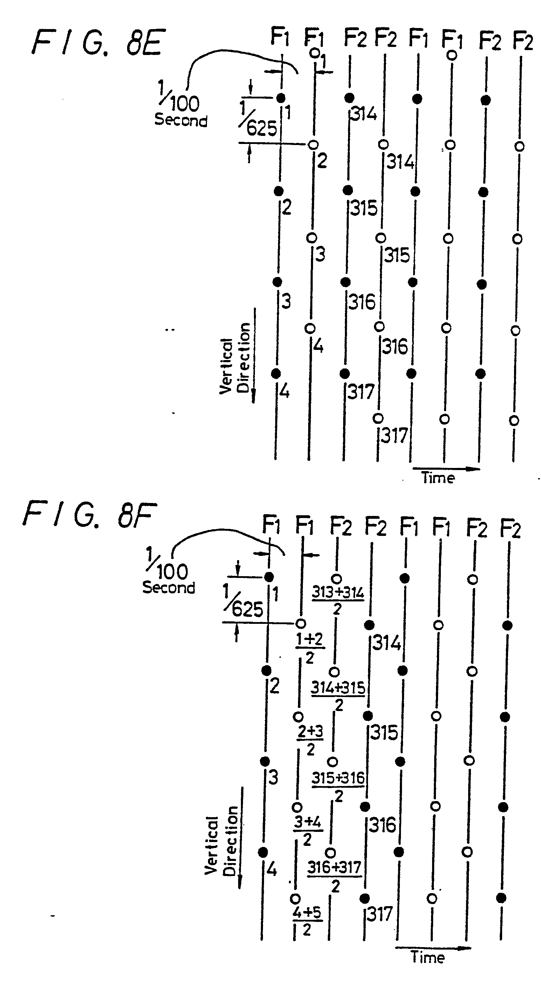

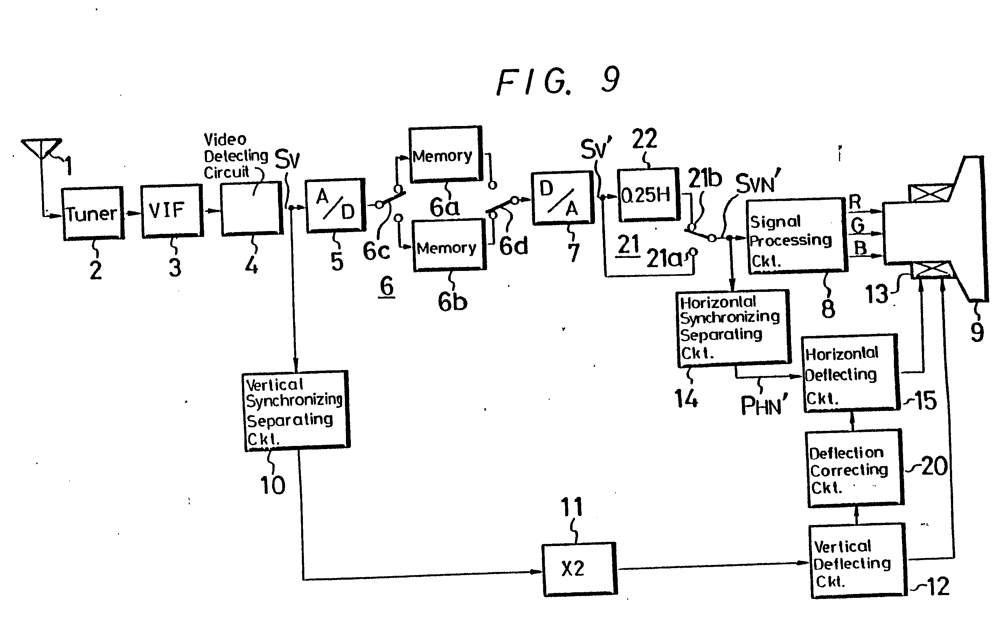

In the embodiment of Figure 6, the change-over of the switching circuits 6c and 6d, and the writing-in operation to the memories 6a and 6b are carried out similarly to those of the example shown in Figure 1, but under control of a memory control circuit 19, the reading out timing from the memories 6a and 6b is controlled so that from the switching circuit 6d is derived a twice field frequency video signal $S_{VN}'$ as shown in Figure 7B. One-dot chain lines in Figure 7B indicate signal-lacking portions. In this case, of the first and second $F_1$ fields read out from the memory 6a, the second $F_1$ field is read out with a delay of 0.25H (corresponding to 0.5 line), while of the first and second $F_2$ fields read out from the memory 6b, the first $F_2$ field is read out with a delay of 0.25H (corresponding to 0.5 line). The video signal $S_{VN}'$ is supplied through the D/A converter 7 to the signal processing circuit 8.

The video signal $S_{VN}'$ derived from the D/A converter 7 is also supplied to the horizontal synchronizing signal separating circuit 14, from which a horizontal synchronizing signal $P_{HN}'$ (having a frequency twice the normal frequency) is supplied through the horizontal deflecting circuit 15 to the deflecting coil 13.

Figure 7A shows the write-in state of the memories 6a and 6b, in which arrows indicate the positions of the vertical synchronizing signal $P_V$ from the vertical synchronizing signal separating circuit 10.

Arrows in Figure 7B show the positions of signals which are supplied from the frequency multiplier 11 to the vertical deflecting circuit 12. The cycles thereof are equal to one another.

A deflection correction circuit 20 corrects, for example, the pin-cushion distortion, and permits a parabolic wave current of the vertical synchronizing frequency for correcting the pin-cushion distortion to be superimposed on the horizontal deflection circuit.

Other circuit elements are arranged similarly to those of the example shown in Figure 1.

Figure 8D shows the scanning line arrangement and the field arrangement in the embodiment of Figure 6. In Figure 8, black circles and white circles respectively indicate scanning lines. In the embodiment of Figure 6, since the second $F_1$ field, is read out with a delay of 0.25H, the scanning lines in the second $F_2$ field are formed below the scanning lines in the first $F_1$ field, with a displacement of half the scanning line interval. Moreover, since the reading of the first $F_2$ field is carried out with a delay of 0.25H, the scanning lines in the first $F_2$ field are formed below the scanning lines in the second $F_2$ field, with a displacement of half the scanning line interval.

Figure 8A shows the scanning line arrangement and the field arrangement formed by the video signal $S_V$. Figure 8B shows the like arrangement made by the example of Figures 1 or 3. Figure 8C shows the scanning line arrangement and the field arrangement for a double line speed system in which two scanning lines from the same signal are repeated twice successively. As will be clear from these figures, the synthesis of the first and second $F_1$ fields of the example of Figure 6 is equivalent to the $F_1$ field of the double line speed system, and the synthesis of the first and second $F_2$ fields in the example of Figure 6 becomes equivalent to the $F_2$ field of this double line speed system. In other words, the example of Figure 6 is equivalent to the case where the scanning order of the signal of the previously proposed double line speed system is changed such that the signal of 625 lines/50 fields of the non-interlaced system is converted to an interlaced signal of 312.5 lines/100 fields and 2:1.

With the television receiver of Figure 6, since the cycles of the signal to be supplied to the vertical deflecting circuit 12 are equal, the respective vertical periods become equal to one another. Thus, the horizontal deflecting current waveforms on which the parabolic wave current of the vertical synchronizing frequency for correcting the left and right pin-cushion distortions are superimposed are the same during each vertical period. Thus unlike the example of Figure 3, no jitter is produced at the left and right sides of the picture screen. Moreover, since the interlace-ratio is kept constant, it is possible to obtain a good picture image. Furthermore, with the embodiment of Figure 6, since the reading of the second $F_1$ field is carried out with a delay of 0.25H, and the reading of the first $F_2$ field is carried out with a delay of 0.25H, as in the example of Figure 3, the continuity of the horizontal synchronization is maintained.

In the embodiment of Figure 9, the read timing from the memories 6a and 6b is not controlled, but a delay line is used.

In the embodiment of Figure 9, the change-over of the switching circuits 6c and 6d and the writing in and/or reading out from the memories 6a and 6b are carried out similarly to the example of Figure 1, so that from the switching circuit 6d, there is derived a twice field frequency video signal $S_V{}'$ as shown in Figure 2B.

The video signal $S_V{}'$ converted to an analogue signal by the D/A converter 7 is supplied to one fixed contact 21a of a switching circuit 21, and also through a delay line 22 having a delay time of 0.25H (corresponding to 0.5 line) to the other fixed contact 21b thereof. The switching circuit 21 engages the contact 21a during the first $F_1$ field and the second $F_2$ field, and the contact 21b during the second $F_1$ field and the first $F_2$ field of the video signal $S_V{}'$. Accordingly, from the switching circuit 21, there is derived the video signal $S_{VN}{}'$ (shown in Figure 7B) similar to the embodiment of Figure 6, which then is fed to the signal processing circuit 8.

The video signal $S_{VN}{}'$ from the switching circuit 21 is also supplied to the horizontal synchronizing signal separating circuit 14.

As a result, with the embodiment of Figure 9, a display similar to that of the embodiment of Figure 6 can be obtained.

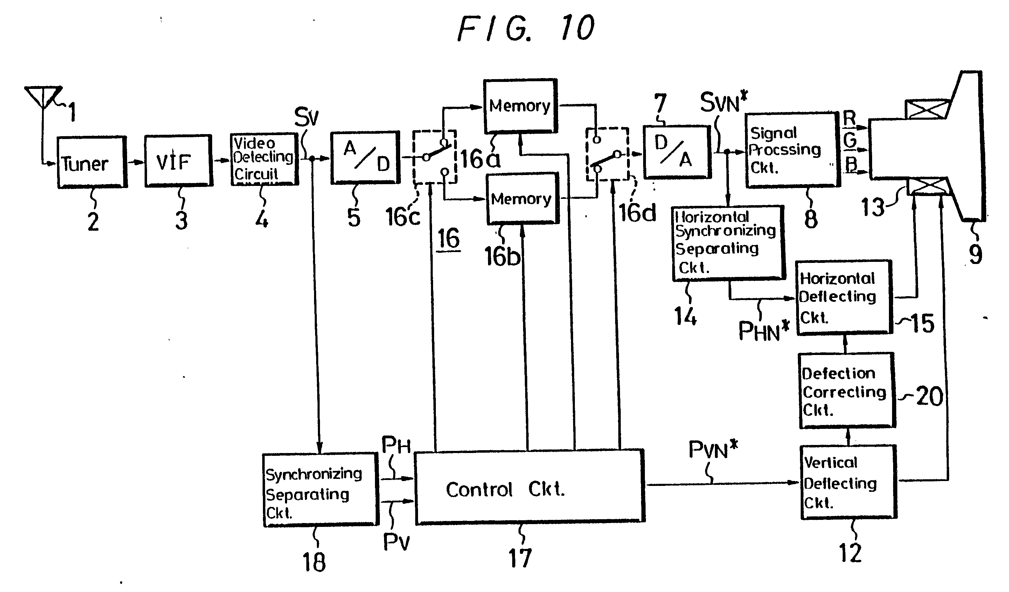

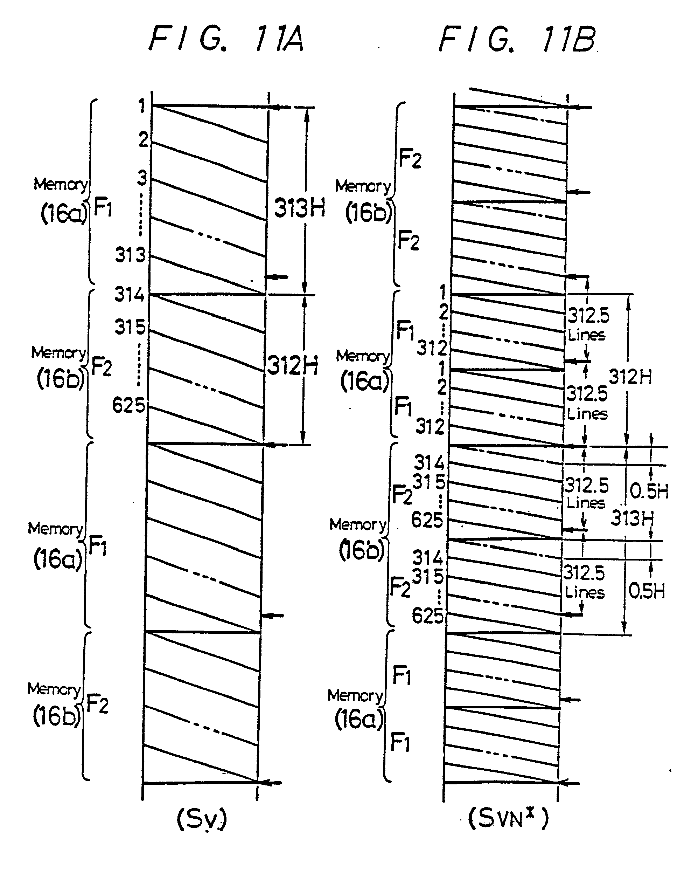

In the embodiment of Figure 10, the change-over of the switching circuits 16c and 16d and the write-in operation in the memories 16a and 16b are carried out similarly to those of the example of Figure 3, but the read timing from the memories 16 and 16b is controlled by the control circuit 17 so that from the switching circuit 16d is derived a twice field frequency video signal $S_{VN}{}^*$ shown in Figure 11B. That is, a one-dot chain line in Figure 11B indicates a signal-lacking portion, and the first and second $F_2$ fields are read out from the memory 16b with a delay of 0.5H (corresponding to one line). The video signal $S_{VN}{}^*$ is supplied through the D/A converter 7 to the signal processing circuit 8.

The video signal $S_{VN}{}^*$ derived from the D/A converter 7 is also supplied to the horizontal synchronizing signal separating circuit 14, from which a horizontal synchronizing signal $P_{HN}{}^*$ (having a frequency twice the normal frequency) is supplied through the horizontal deflecting circuit 15 to the deflecting coil 13.

Figure 11A shows the write-in state of the memories 16a and 16b, in which the arrows indicate the positions of the vertical synchronizing signal $P_V$ from the synchronizing signal separating circuit 18.

In the embodiment of Figure 10, the control circuit 17, the vertical synchronizing signal $P_{VN}{}^*$ which is produced at the timing shown by the arrows of Figure 11B is supplied to the vertical deflecting circuit 12. That is, the vertical synchronizing signal $P_{VN}{}^*$ is produced at the beginning of the first $F_2$ field; with a delay of 312.5 lines after the preceding timing; with a further delay of 312.5 lines after the preceding timing; with a further delay of 312.5 lines after the preceding timing and with a further delay of 312.5 lines after the preceding timing, that is at the beginning of the next first $F_2$ field, and at similar timings thereafter. In this way, the respective cycles of the vertical synchronizing signal $P_{VN}{}^*$ in the embodiment of Figure 10 are equal to one another.

The deflection correcting circuit 20 is used to correct, for example, the pin-cushion distortion, and this deflection correction circuit 20 is the same as that used in the embodiment of Figure 6.

Figure 8E shows the scanning line arrangement and the field arrangement in the embodiment of Figure 10. In the example of Figure 11, the timing at which the vertical synchronizing signal $P_{VN}{}^*$ is produced is exactly the same as mentioned above, and the reading of the first and second $F_2$ fields is carried out with a delay of 0.5H, so that the scanning lines in the first $F_1$ field and the scanning lines in the first $F_2$ field are formed at the same positions, the scanning lines in the second $F_1$ field are formed above the scanning lines in the first $F_1$ field with a displacement of half the scanning line interval, and the scanning lines in the second $F_2$ field are formed below the scanning lines of the first $F_2$ field with a displacement of half the scanning line interval.

The synthesis of the first and second $F_1$ fields of the embodiment of Figure 10 is equivalent to the $F_1$ field of the double line speed system (see Figure 8C), while the synthesis of the first and second $F_2$ fields of the embodiment of Figure 10 becomes equivalent to the $F_2$ field of the double line speed system.

As described above, with the embodiment of Figure 10, since the cycles of the vertical synchronizing signal $P_{VN}{}^*$ supplied to the vertical deflecting circuit 12 are equal to one another, the respective vertical periods become equal to one another, and thus no jitter will be produced. Moreover, since the interlace-ratio is kept constant, it is possible to obtain a picture of good quality. With this embodiment, since the reading of the first and second $F_2$ fields is carried out with a delay of 0.5H, the continuity of the horizontal synchronization can be maintained similarly to the example of Figure 3.

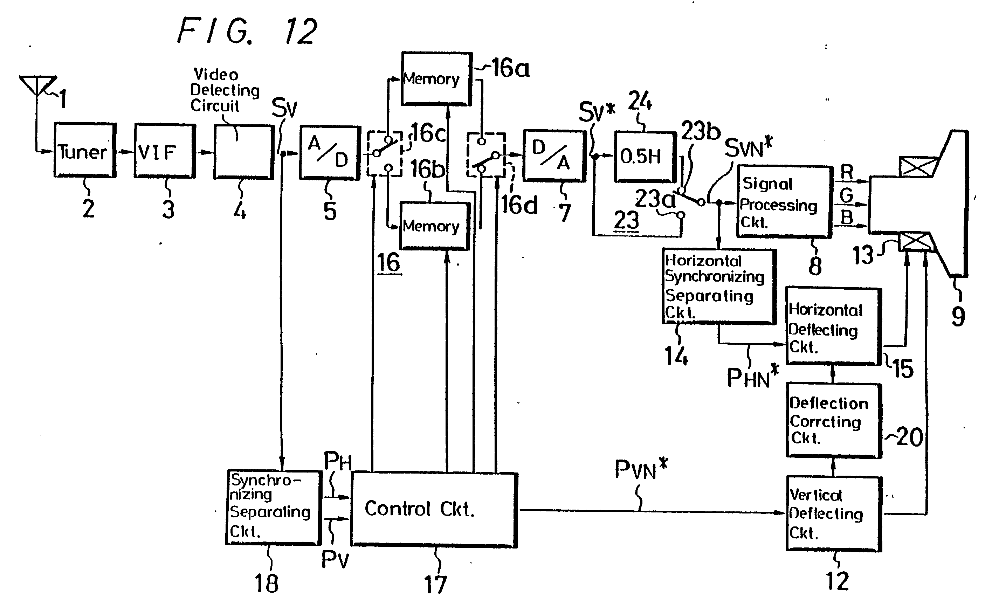

In the embodiment of Figure 12, instead of controlling the readout timing from the memories 16a and 16b, a delay line is used. The change-over of the switching circuit 16c and 16d, and the write-in and/or read-out from the memories 16 and 16b are carried out similarly to those of the example of Figure 3, and from the switching circuit 16d is derived a twice field frequency video signal $S_V{}^*$ such as shown in Figure 4B.

Moreover, in the embodiment of Figure 12, the video signal Sv* converted to the analogue signal by the D/A converter 7 is supplied to one fixed contact 23a of a switching circuit 23, and also through a delay line 24 having a delay of 0.5H (corresponding to one line) to the other fixed contact 23b thereof. The switching circuit 23 engages the contact 23a during the first and second $F_1$ fields of the video signal Sv*, and the contact 23b during the first and second $F_2$ fields of the video signal Sv*. Accordingly, from the change-over switch 23, there is derived a video signal $S_{VN}$* (shown in Figure 11B) similar to that of the embodiment of Figure 10, and this video signal is fed to the signal processing circuit 8.

The video signal $S_{VN}$* derived from the switching circuit 23 is also supplied to the horizontal synchronizing signal separating circuit 14.

As a result, also in this embodiment of Figure 12, a display similar to that of the embodiment of Figure 10 can be obtained.

In the embodiment of Figures 10 and 12, while the vertical deflecting circuit 12 is supplied with the vertical synchronizing signal $P_{VN}$* from the control circuit 17, it is possible that instead of the synchronizing signal $P_{VN}$*, the vertical synchronizing signal Pv, which is supplied from the synchronizing separating circuit 18, is multiplied by two and then supplied to the vertical deflecting circuit 12.

In the embodiment of Figure 6, the display equivalent to the interlaced system of 312.5 lines/100 fields and 2:1 is obtained, so that flicker can be suppressed and the respective vertical cycles become equal to each other, thus requiring no special deflection correcting circuit. However, if the arrangement of the scanning lines as shown in Figure 8D is used, or two scanning lines are continuously formed by the same signal, a step-shape or so-called zig-zag distortion becomes conspicuous on the inclined portion. This zig-zag is described in greater detail in our Japanese Patent Application 58/23998.

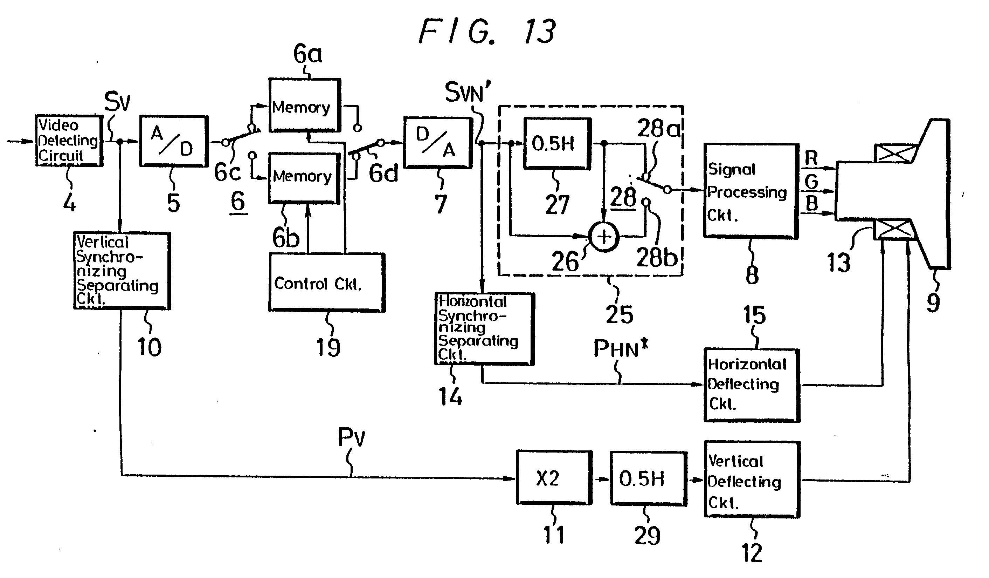

The embodiment of Figure 13 reduces this zig-zag. The video signal $S_{VN}$' converted to an analogue signal by the D/A converter 7 is supplied to an adder 26 which forms a predicting circuit 25. The video signal $S_{VN}$' is further supplied through a delay line 27 having delay of 0.5H (corresponding to one line) to one fixed contact 28a of a switching circuit 28, and to the adder 26. Then, in the adder 26, the video signal $S_{VN}$', and the signal which results from delaying the video signal by $S_{VN}$' 0.5H, are added to each other and then averaged. This added and averaged signal is supplied to the other fixed contact 28b of the switching circuit 28. The switching circuit 28 engages the contact 28a during the first $F_1$ field and the second $F_2$ field of the video signal $S_{VN}$' (shown in Figure 7B), and the contact 28b during the second $F_1$ field and the first $F_2$ field of the video signal $S_{VN}$'. That is, from the switching circuit 28, there is derived a signal which results from delaying the video signal $S_{VN}$' by 0.5H, in the first $F_1$ field and the second $F_2$ field of the video signal $S_{VN}$', and a signal which results from adding and averaging the video signal $S_{VN}$'

and the video signal $S_{VN}$' delayed by 0.5H, in the second $F_1$ field and the first $F_2$ field of the video signal $S_{VN}$', respectively. The signal derived from the switching circuit 28 is supplied to the signal processing circuit 8.

A delay line 29 having a delay of 0.5H is connected between the multiplier 11 and the vertical deflecting circuit 12.

The other elements are similar to those of the embodiment of Figure 6.

The scanning line arrangement and the field arrangement in the embodiment of Figure 13 are as shown in Figure 8F. As will be clear from this Figure, in the embodiment of Figure 13, two scanning lines formed by the same signal do not occur successively but the interpolation signal is formed by adding and averaging the preceding and following scanning lines, so that zig-zag can be alleviated.

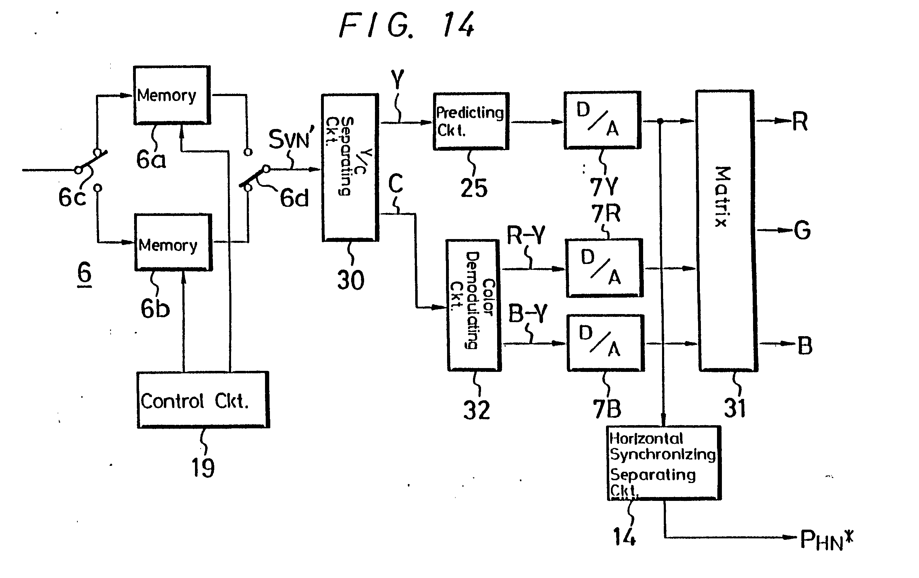

Figure 14 shows another embodiment of the present invention which is a colour television receiver. In this case, after the luminance signal Y and the chrominance signal C have been separated, the predicting circuit 25 of the embodiment of Figure 13 is used.

The video signal $S_{VN}$' from the converting circuit 6 is supplied to a luminance signal/chrominance signal separating circuit 30. The luminance signal Y is supplied through the predicting circuit 25 and a D/A converter 7Y to a matrix circuit 31. The chrominance signal C is supplied to a colour demodulating circuit 32 which produces, for example, a red colour difference signal R−Y and a blue colour difference signal B−Y which then are respectively supplied through D/A converters 7R and 7B to the matrix circuit 31. The matrix circuit 31 produces red, green and blue primary colour signals R, G and B which are respectively fed to a picture receiving tube (not shown in Figure 14).

The output from the D/A converter 7Y is also supplied to the horizontal synchronizing separating circuit 14.

The other portions are formed similarly to those of the embodiment of Figure 6.

In this case, although the predicting circuit 25 may be provided in the chrominance signal system, if it is omitted, the colour television receiver of this embodiment becomes less expensive.

As an embodiment in which the predicting circuit 25 is provided, the embodiments of Figures 13 and 14 each of which corresponds to the embodiment of Figure 6 are illustrated. However, it is possible similarly to consider embodiments which correspond to the embodiments of Figures 9, 10 and 12.

While in the above-described embodiments an interlaced video signal having 625 lines/50 fields and 2:1 has been described, the invention can be similarly applied to video signals of other interlaced systems. Moreover, while in the above-embodiments, the field frequency is doubled, the invention can be similarly applied to cases in which the field frequency is converted to a multiple such as three or four times.

As described above, since the respective vertical cycles are made equal to one another, the horizontal deflecting current waveform on which, for example, the parabolic wave current of the vertical cycle is superimposed is the same during each vertical period, so that there is no jitter at the right and left sides of the picture screen.

## Claims

1. A television receiver comprising:

scan converter means (6) including field-memory means (6a, 6b) to be supplied with an input video signal of an interlaced television signal having a predetermined interlace-ratio;

memory control means (19) for supplying writing and reading signals to said field-memory means (6a, 6b) where said reading signal has a frequency which is a multiple of the frequency of said writing signal;

video display means (9); and

deflection means (13, 12, 15, 20) including vertical deflection means (12) for vertically deflecting said video display means with a vertical synchronizing signal having a constant period;

characterized by:

said scan converter (6) operating such that one field of said input video signal is read repeatedly said multiple number of times and thereafter a succeeding one field of said input video signal is read repeatedly said multiple number of times for deriving an output video signal for supply to said video display means (9); and

timing control means (19, 21, 23) for controlling the timing of said output video signal to have a vertical frequency such that a picture reproduced on said video display means (8) has an interlace-ratio the same as said predetermined interlace-ratio of said input video signal.

2. A television receiver according to claim 1 wherein said timing control means (19, 21, 23) is provided in said memory control means (19) and controls the timing of said reading signal.

3. A television receiver according to claim 1 wherein said timing control means (19, 21, 23) is formed as a delay compensation circuit (21, 22; 23, 24) operated at a vertical rate, and said delay compensation circuit (21, 22; 23, 24) is inserted between said scan converter (6) and said video display means (9).

## Patentansprüche

1. Fernsehgerät mit

einem Abtastumsetzer (6), der Teilbildspeichermittel (6a, 6b) enthält, die mit einem Eingangsvideosignal eines Zeilensprung-Fernsehsignals beliefert werden, das ein vorbestimmtes Zeilensprungverhältnis hat,

einem Speichersteuermittel (19) zum Liefern von Schreib- und Lesesignalen an die Teilbildspeichermittel (6a, 6b), wobei das Lesesignal eine Frequenz hat, die ein Vielfaches der Frequenz des Schreibsignals beträgt,

einem Videoanzeigemittel (9) und

Ablenkmitteln (13, 12, 15, 20), die ein Vertikalablenkmittel (12) zum vertikalen Ablenken des Videoanzeigemittels mit einem Vertikalsynchronisierungssignal enthalten, das eine konstante Periode aufweist,

gekennzeichnet durch

einen Abtastumsetzer (6), der derart arbeitet, daß ein Teilbild des Eingangsvideosignals zum Ableiten eines Ausgangsvideosignals zur Lieferung an das Videoanzeigemittel (9) wiederholt das Veilfache von Malen ausgelesen wird und danach ein folgendes Teilbild des Eingangsvideosignals wiederholt das Vielfache von Malen ausgelesen wird, und

ein Zeitsteuerungsmittel (19, 21, 23) zum Steuern der zeitlichen Lage des Ausgangsvideosignals, damit dieses eine derartige Vertikalfrequenz hat, daß ein Bild, welches auf dem Bildschirm des Videoanzeigemittels (9) wiedergegeben wird, ein Zeilensprungverhältnis hat, das dasselbe wie das vorbestimmte Zeilensprungverhältnis des Eingangsvideosignals ist.

2. Fernsehgerät nach Anspruch 1, bei dem das Zeitsteuerungsmittel (19, 21, 23) in dem Speichersteuermittel (19) vorgesehen ist und die zeitliche Lage des Lesesignals steuert.

3. Fernsehgerät nach Anspruch 1, bei dem das Zeitsteuerungsmittel (19, 21, 23) als eine Verzögerungskompensationsschaltung (21, 22; 23, 24) ausgebildet ist, die bei einer Vertikalrate betrieben wird, und daß die Verzögerungskompensationsschaltung (21, 22; 23, 24) zwischen den Abtastumsetzer (6) und das Videoanzeigemittel (9) eingefügt ist.

## Revendications

1. Téléviseur comprenant:

un moyen convertisseur d'analyse (6) incluant un moyen à mémoires de trames (6a, 6b) pour recevoir un signal vidéo d'entrée d'un signal de télévision entrelacé ayant un rapport d'entrelacement prédéterminé;

un moyen de commande de mémoire (19) pour fournir des signaux d'écriture et de lecture au moyen à mémoires de trames (6a, 6b) dans lequel le signal de lecture a une fréquence qui est un multiple de la fréquence du signal d'écriture;

un moyen de visualisation (9); et

un moyen de déviation (13, 12, 15, 20) incluant un moyen de déviation verticale (12) pour dévier verticalement le moyen de visualisation avec un signal de synchronisation verticale ayant une période constante;

caractérisé par:

le convertisseur d'analyse (6) fonctionnant de telle sorte qu'une trame du signal vidéo d'entrée est lue de façon répétitive le nombre multiple de fois et une trame suivante du signal vidéo d'entrée est ensuite lue de façon répétitive le nombre multiple de fois pour dériver un signal vidéo de sortie pour le fournir au moyen de visualisation (9); et

un moyen de commande de synchronisation (19, 21, 23) pour commander la synchronisation du signal vidéo de sortie afin qu'il ait une fréquence verticale telle qu'une image reproduite dans le moyen de visualisation (8) a un rapport d'entrelacement égal au rapport d'entrelacement prédéterminé du signal vidéo d'entrée.

2. Téléviseur selon la revendication 1, dans lequel le moyen de commande de synchronisation (19, 21, 23) est prévu dans le moyen de commande de mémoire (19) et commande la synchronisation du signal de lecture.

3. Téléviseur selon la revendication 1, dans lequel le moyen de commande de synchronisation (19, 21, 23) est formé comme un circuit de compensation de retard (21, 22; 23, 24) mis en fonctionnement à une vitesse verticale, et le circuit de compensation de retard (21, 22, 23, 24) est inséré entre le convertisseur d'analyse (6) et le moyen de visualisation (9).

*FIG. 1*

EP 0 162 116 B1

EP 0 162 116 B1

# F I G. 2A

# F I G. 2B

(Sv)

(Sv')

2

# FIG. 3

# EP 0 162 116 B1

## F I G. 4A

## F I G. 4B

(Sv)

(Sv*)

FIG. 5A (PV*)

312Lines 311.5Lines 313Lines 313.5Lines 312Lines

FIG. 5B

FIG. 5C

*F I G. 6*

Tuner — 2

VIF — 3

Video Detecting Circuit — 4

A/D — 5

Sv

Memory — 6a

Memory — 6b

6c

6d

Control Ckt. — 19

6

D/A — 7

SvN'

Signal Processing Ckt. — 8

R G B

— 9

— 13

Horizontal Synchronizing Separating Ckt. — 14

PHN'

Horizontal Deflecting Ckt. — 15

Deflection Correcting Ckt. — 20

Vertical Deflecting Ckt. — 12

X2 — 11

Vertical Synchronizing Separating Ckt. — 10

Pv

1

6

# F I G. 7A

# F I G. 7B

(Sv)

(SvN')

F I G. 8A

F1  F2  F1  F2

1/50 Second

1/625

1
2
3
4

314
315
316
317

Vertical Direction

Time

F I G. 8B

F1  F1  F2  F2  F1  F1  F2  F2

1/100 Second

1/625

1  1
2  2
3  3
4  4

314 314
315 315
316 316
317 317

Vertical Direction

Time

## F I G. 8C

## F I G. 8D

# F I G. 8E

# F I G. 8F

# FIG. 9

FIG. 10

# F I G. 11A

# F I G. 11B

(Sv.)

(SvN*)

# F I G. 12

*F I G. 13*

*FIG. 14*